# EUROPÄISCHE PATENTANMELDUNG

(11) **EP 1 378 156 A1**
(43) Veröffentlichungstag der Anmeldung: **07.01.2004**
(21) Anmeldenummer: 03468001.7
(22) Anmeldetag: 19.06.2003
(51) Int. Cl.: A01D 34/82, A01D 34/84

(54) **Distanzschutz und Klinge für Mähmaschine**

(30) Priorität: 26.06.2002 SI 200200161
(71) Anmelder: Alojz, Tomazin, 6000 Koper (SI)
(72) Erfinder: Alojz, Tomazin, 6000 Koper (SI)

(57) **Zusammenfassung**

Die Schutzplatte hat eine runde Form, beguenstigung aus einer Stahlplatte. Im mittelpunkt hat es ein rundes Loch.Es dient zum anbringen des Kreislaufmessers auf das Antriebswelle Gehaeuse. Sein ausen Durchmesser ist etwas groessr (Einige Milimeter ) als die vom zugehoerigen Maehenmesser. Um den ganzen Ring sind Falzen (3) orientirungsmesig stralenfoermig nehbeneinander mit geringsten Abstand aufgestellt. So geben sie die Schutzplatte eine Frorm von einen Zahnrad mit duenen Zaehnen. Die Schutzplatte(1) mit seinen Falzen laest nur Grashalme durch, die so dick sind wie die Falzen (3) der Mundoeffnung (4) und die da so kurz unter dem drehenden Messer hinstellen, unterdessen sind die anderen dickeren Pflanzen mit dem sogenanten Messer nicht moeglich in kontakkt zu kommen und, so schuetzt man von unerwuenschten Verlezungen, zugleich verhidert dass das Messer auf einen haerteren Teil aufprallt und damit kann mann die Motor-maehmaschine beschaedigen und auch denjenigen wer sie betetigt. Wegen seiner naeheren anmachung des Messers schuetzt die Schutzplatte perfekt den Maeher bei maehen und da durch braucht er keinerlei Schutzmittel.

## Beschreibung

Die Grundlage der Schutzplatte wo die Rotations-Platte angebracht ist, schuetzt vor den abgehackten Teilen, die aber beim maehen auf allen seiten fliegen, deswegen erfuellt die Schutzplatte auch die Arbeit sehr schlecht, wegen des grossen Abstandes des Messers und der Schutzplatte. Dafuer mus der Maeher gut geschuetzt sein(Augen, Gesicht, Haende und Fuesse), weil die abgehackten Teile ueberrall hinweg fliegen. Genauso schuetzt es nichht vor groesseren Teilen z.b. ...Steine, weil die beim anstossen zum unkontrolierten Bewegungen und zum grossen Abprall kommen kan.

Die Schutzplatte nach meiner Erfindung hebt alle angegebenen mangelhafte ab, nebenbei beim maehen ist es unmoeglich einen direkten Kontakt mit dem Rotationsmesser zu machen und so schuetzt es vor Verlezungen und genauso auch vor groesseren Teilen z.b. ....Aesten, Pflanzen, Baumstammen u.s.w..

Die Patentierung hat einen grossen erfolg, wegen seiner specifischen Dimension und genau so bei der Anpassung des Messers von dem er minimal entfernt ist.

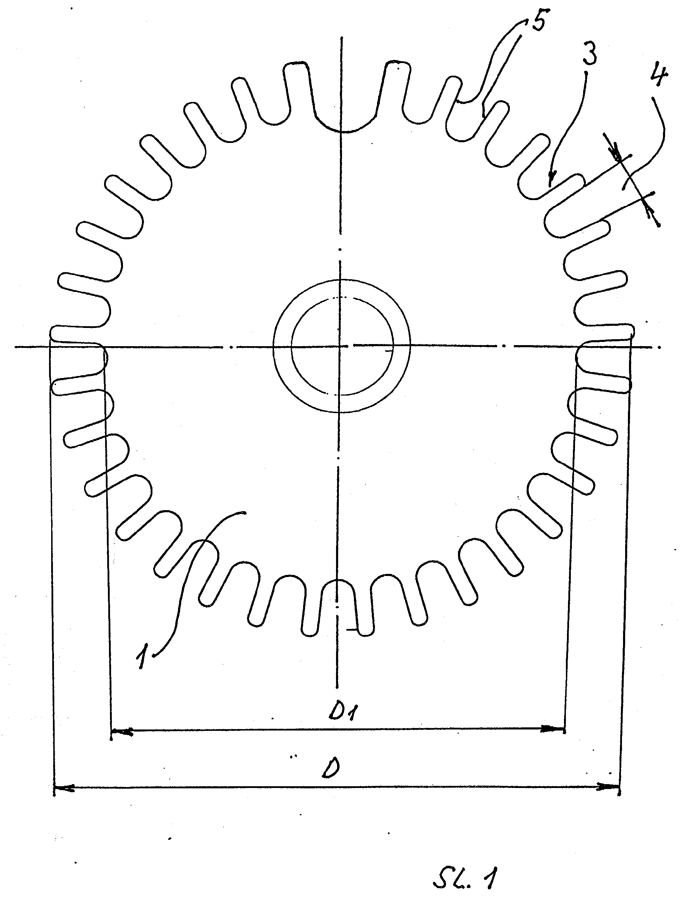

Bild 1 ........ Sicht von oben - Die Suhutzplatte nach der Erfidung

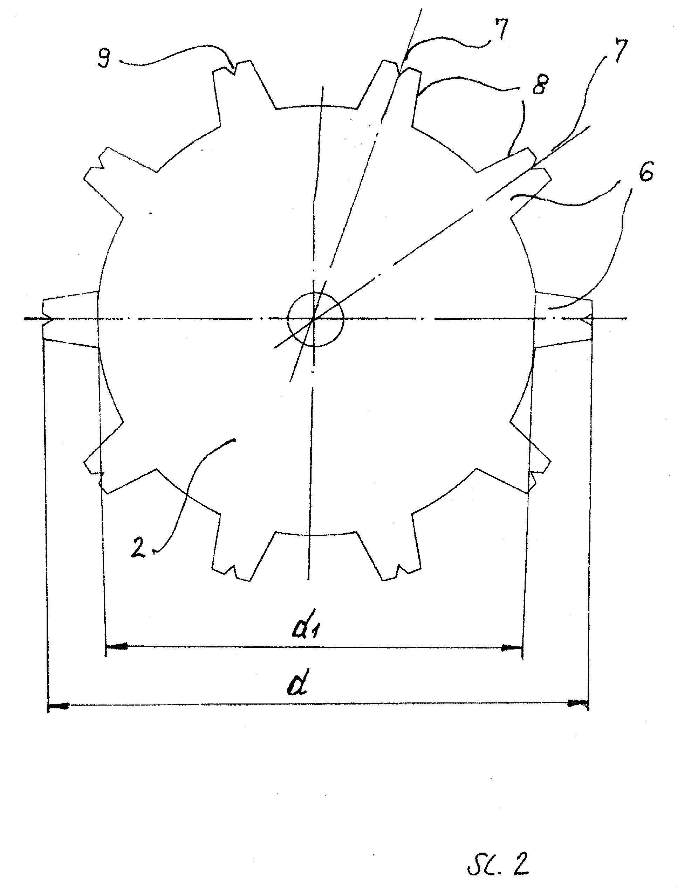

Bild 2 ........ Sicht von oben - Der Rotationsmesser nach der Erfindung

Die Schutzplatte nach der Erfindung hat eine Runde Formplatte, beguenstigung aus einer Stahlplatte. In seiner Mitte hat es ein rundes Loch zum anbringen auf das Kreislaufsmesser Antriebwelle Gehause des zirkulation Maehmessers. Der Ausendurchmesser **(D)** ist etwas groesser von den Ausendurchmesser **(d)** vomzugehoeringen Maehmesser. Um den ganzen Ring sind Falzen **(3)** orientirungsmesig einem nach dem anderen mit dem mindesten Abstand aufgestellt und so geben sie die Form von einem Zahnrad mit duenen Zaehnen, beziehungsweise Kettenfoermig. Die Tiefe der Falzen **(3)** ist so, das der Stammpunkt des Kreises **(D1)** uebereingestimt mit dem Stammpunkt des Kreises **(d1)** mit dem zugehoeringen Maehmesser. Die Breite des Falzen, bezieungsweise genauer beschrieben- Die Falzen **(3)** von der Mundoeffnung **(4)** begrenzt die breite der stengelartige Pflanzen, die wir beim maehen nicht verletzen moechten. Die Schutzplatte nach der Erfindung laest nur duenere Sachen, die enger sind vom Falzen **(3)** - Mundoefnung **(4)** und so mit kurz unter dem drehenden Messer ausgesetzt ist, waerend die dickeren Pflanzen, mit dem so genanten Messer nicht ermoeglicht und so verhinder wir unerwuenschten Verlezungen. Darum sind die Schutzplatten nach der Erfindung mit den verschiedenen Falzen **(3)** so hergestellt, damit der Benutzer vor den maehen an den Maeher befestigt. Besser ist die Universale Schutzplatte nach der Erfindung mehr geeignet zum maehen mit engeren Falzen **(3)** mit einem breiterem Falzen Reihe - 30 mm oder mehr, den man dur betaetigt wo man hin und her eine groessere stengelartige Pflanze maehen moechte. Die Schutzplatte ermoeglicht uns einen feinen und sauberen Schnitt (alle Teile die Vertical stehen) um die restlichen Teilen, wo zur beschedigung kommen kann z.b. ... mann maeht um einen Baum und so kann man mit der Schutzplatte an den Baum anlehnen un muehungslos, ohne dass man den Baum beschedigt, um ihn maehen, weil sein Durchmesser groesser ist von der groesse des Falzen **(3)**

Neben der Beschribung hat die Schuetzplatte nicht nur den Sinn keinnen Kontakt mit dem drehenden Messer sondern auch die Bedeutung der Sicherheit. Wenn das drehende Messer auf einen harten Gegenstand trift, z.b .... Stein, kommt es zum abprall des Steines oder wenn es was groeseres waehre, stoesst den Motormaeher weg, was in allen zwei Faellen seher gefaerlich sein kann. Solchene situation kann es in diesen Fall nicht geben.

Beim prakticiren, ausgeruestet mit der Schutzplatte nach der Erfindung, hat sich herausgestelt das mann keinerlei Schutzsachen (Anzuege) brauchen muss.

Die Schutzplatte hat nicht nur die beschriebene Tetichkeit nach der Erfindung(zusammenhang mit dem Messer) beim maehen (was beim maehen anstendigt herforkommt). Die seitlichen Falzen Flancken **(5)** verhindert naemlich, dass das Gras bei der Messerklinge ausrutscht. Die Pflanzen oder das Gras stuetzt mann mit der Messerklinge an den seitlichen Falzen und dann schneidet es ab, so ist viel wirkunsfoller, ob wohl auch nicht bei einer schaerferen Klinge. Diesen Efekt ist nur erfolgreich wenn das Messer minimal in der richtung der Antriebswelle Maeher von der Schutzplatte entfernt ist und auch der Grund fuer den Anbau der Schutzplatte nach der erfindung des Messers. Der zweite Grund dadurch ist, bei der dieser befestigung verhidert es auch, dass die Abgeschnittenen Teile zu dem Benutzer fliegen.

Die Schutzplatte nach der Erfindung mit dem beschriebenem Details verbessert nich nur den Efekt beim maehen auch beim schneiden von anderen Gegenstaende w.z.b. Aeste, oder auch Gebuesche. Mit der Kobination der Schutzplatte nach meiner Erfindung, mit dem Messer **(2)** werde ich es noch beschreiben (der Ausmass ist begrenzt ) beim saegen kleinerlei von Aesten und Bueschen. Das Rotationsmesser **(2)** nach meiner Erfindung ist aus Stahlplatte und hatt mindestens 6 gleichmaessige Klingen **(6)** rund um die ganze Platte verteilt, wie bei einer Zahnsaege. Die Klingen 6 sind simetrisch mit Hinsicht auf die Strahlenfoermigen Ablauf der Achse **(7)** . Alle zwei Seiten **(8)** der Klinge sind schneide Klingen so das mann beideseitig benuetzten kann. Am Rande des Messers **(6)** sind kleine Falzen **(9)** enthalten, weil der Zweck daran ist, reibungslos bei der verwendung des Messer als Saege.

Die pririoritaet des Messers nach der Erfindung schon den vorenthaltenen Messer ist in dem, das je meher Klingen es sind des zu geringeren belastungen kommt es. Deswegen ist auch die Ausdauer laenger als bei dem anderen. Auch beim Aufprall an einen haerteren Gegenstand viel milder. Auch wegen der Simetrischen Ausfuerung ist die Klinge beideseitig benutzbar, das seine Lebensbeduerftnisse das doppellte verlaengert.

Mit den eizelnen Versuchen habe ich festgestellt, das die besten Eigenschaften beim maehen des Grases und kleinerlei Aesten mit meher als zehn oder zwoelf Messern **(2)** sind.

## Patentansprüche

1. Die Schutzplatte **(1)** fuer die Motor-maehmaschine, **mit dieser Bezeichnung,** ist mit den angegebenen Maeher knapp ueber den Rotationsmesser, hat eine runde Form, dass der aeussere Durchmesser **(D)** fuer ein paar milimeter groesser ist von den zugehoeringen Messer **(d)** und dass er um den ganzen Ring strahlenförmig orientirungsmesige, mit dem mindesten Abstand, Falzen **(3)** hat, dass sie eine Form von einen Zahnrad geben mit sehr duenen Zaehnen, beziehungsweise Kettenfoermig.

2. Die Tiefe der Falzen von der Schutzplatte, bei der ersten Foerderungen, **mit diser Bezeichnung,** ist so, das der Stammpunkt des Kreises (D1) uebereingestimt mit dem Stammpunkt des Kreises (d1) mit dem zugehoeringen Messer. Die breite des Falzen, bezieungsweise genauer beschrieben-Die Falzen (3) von der Mundoefhung (4) begrenzt die breite der stengelartige Pflanzen, die wir beim maehen nicht verletzen moechten. Die Schutzplatte nach der Erfindung laest nur Pflanzen, die enger sind von Falzen (3)-Mundoefnung (4) knapp unter dem Drehmesser ausgesetzt ist, waerend die dickeren Sachen oder Gegenstaende, mit den genanten Messer nicht ermoeglicht und so verhinder wir Verlezungen

3. Die Schutzplatte **(1)** mit den vorgehenden angegebenen Foerderungen, **mit dieser** Bezeichnung, dass sie an den Rotationsmaeher zusammen mit den Rotationsmesser **(2)** angebracht ist. Das Messer hat am Rande mindenstens sechs gleichmaesige aufgeteilten Klingen **(6)**, aehnlich wie beim Zahnrad. Die Klingen **(6)** sind simetrisch mit Hinsicht auf die Strahlfoermigen ablauf der Achse **(7)** , in richtug Mitte sich ausbreitet, so das seine breite, vom Rande **(d1),** breiter ist vom obersten Teil **(d).** Alle zwei Seiten **(8)** der Klinge sind schneide Klingen, so dass mann beideseitig benutzen kann. Am Rande des Messers **(6)** sind kleine Falzen **(9)** enthalten.
